# EUROPEAN PATENT SPECIFICATION

(11) **EP 1 270 963 B1**
(45) Date of publication and mention of the grant of the patent: **16.11.2005**
(21) Application number: 02254272.4
(22) Date of filing: 19.06.2002
(51) Int. Cl.: F16B 25/00, F16B 33/02, B21H 3/02

(54) **Fastener**
Befestigungselement
Dispositif de fixation

(30) Priority: 19.06.2001 US 885796
(43) Date of publication of application: 02.01.2003
(73) Proprietor: ILLINOIS TOOL WORKS INC., Glenview, Illinois 60025 (US)
(72) Inventor: Levey, Kenneth, West Chicago, Illinois 60185 (US); Dohm, Stephen, Geneva, Illinois 60134 (US)
(74) Representative: Finnie, Peter John

(56) References cited:
- DE-A- 19 735 280
- FR-A- 1 292 780
- GB-A- 1 482 624
- US-A- 5 110 245
- US-A- 5 779 417

## Description

The present invention relates generally to the field of fasteners, and more particularly to a fastener having at least one screwthread with multiple projecting portions to provide improved insertion and pullout properties.

In the field of fasteners, particularly threaded fasteners, a wide range of configurations are known and currently available. In general, threaded fasteners present a threaded shank on which one or more screwthreads are formed. The screwthreads create a helical inclined plane which contacts mating surfaces of one or more mechanical components as the fastener is rotated for insertion or removal. Various threaded fastener designs have been specifically adapted for use with various materials, such as wood, metals, composite materials, concrete, and so forth.

In most conventional threaded fasteners, a head is formed at the end of the threaded shank to facilitate rotation of the fastener into and out of an application. The shank itself presents a lower tip opposite the head, with the screwthread being formed around the shank. The characteristics of the screwthread determine both the torque required to insert the fastener into the application, the torque required to remove the fastener, and the force which resists pullout of the fastener once in place. In most conventional applications, the screwthread is uniform in shape over the entire shank, with a reduction in height being provided in certain applications, such as for wood or metal screws.

Specialty fasteners have been developed that present a variety of features along the screwthread. For example, screws having ridges or depressions along the screwthread have been developed, such as for penetrating into certain materials during insertion.

An example of one such fastener is described in US-A-5110245. This shows a threaded fastener comprising:
a head; a tip; and, a shank extending between the head and the tip, the shank having a helical screwthread formed thereon, the screwthread including a plurality of successive projecting portions separated from one another by recessed portions, each projecting portion extending radially beyond adjacent recessed portions and presenting a respective profile including a lead-in profile in a direction towards the tip, a respective lead-out profile in a direction towards the head and a central section of a substantially uniform radial dimension. The crest of the thread is removed in the recessed portions as is typical for all conventional fasteners.

In general, however, these designs have presented less flexibility and less than optimal performance in use. There is still a need, therefore, for improved fasteners which can be adapted for particular purposes and materials, through creative screwthread design. There is a particular need for fasteners which present relatively uniform or constant insertion torque characteristics, with excellent pullout resistance, and which can be manufactured in straightforward and inexpensive ways.

According to this invention such a fastener is characterised in that the screwthread includes a crest formed by a single continuous apex.

The present technique provides an improved fastener design which responds to such needs. The fastener presents a screwthread which includes multiple projecting portions separated by recessed portions. In a particularly favored embodiment, two screwthreads of similar geometry are provided. The projecting portions may be identical to one another along the entire length of the screwthread, or may be varied to provide the desired characteristics. For example, the lead-in of the projecting portions need not be identical to the lead-out, and the lead-in and lead-out of projecting portions along the length of the screwthreads may vary. Similarly, the length, height (radial extent) and form of the projecting portions may vary along the length of the screwthreads. Where more than one screwthread is provided, overlap between the projecting portions formed on one thread and the recessed portion outer may be provided so as to maintain generally uniform torque during insertion of the fastener in an application. The recessed portion between the projecting portions also offers locations in which certain materials may be allowed to collect, such as cold-flow plastics, plaster or concrete, or so forth. The lead-out of the projecting portions may be formed so as to provide enhanced pullout resistance.

The fasteners designed in accordance with the present techniques may be used in a wide variety of applications. They are particularly well suited, however, to applications in which the fastener interfaces directly with one or more materials to be secured, such as metals, plastics, wood, concrete, and other composite materials. The overall configuration of the screwthreads and projecting portions can be adapted specifically to such materials, and to the desired level of insertion torque pullout resistance, and so forth. The fasteners are particularly adapted, moreover, for mass production, such as through roll thread forming operations.

Particular embodiments will now be described with reference to the accompanying drawings; in which;
Figure 1 is a prospective view of a threaded fastener in accordance with aspects of the present technique;
Figure 1A is a sectional view through the fastener illustrated in Figure 1 showing the configuration of projecting portions formed in the two screwthreads of the embodiment of Figure 1;
Figure 2 is a diagram illustrating an exemplary screwthread of a fastener such as that illustrated in Figure 1;
Figure 3 is a diagram illustrating an exemplary configuration of two screwthreads for a fastener such as that illustrated in Figure 1 in accordance with particular aspects of the present technique;
Figure 4 is a diagram illustrating evolution of characteristics of a screwthread for a fastener of the type illustrated in Figure 1 in accordance with aspects of the present technique;
Figure 5, is diagram similar to that of Figures 2, 3 and 4, illustrating a particularly preferred configuration of a double-screwthread fastener in accordance with aspects of the present technique;
Figure 6 is a plan view of two screwthreads, shown extended vertically, illustrating overlap between portions of the screwthreads;
Figure 7 is a plan view of a portion of a tool used in forming a die for machining the fasteners, such type illustrated in Figure 6, in a roll threading operation;
Figure 8 is an elevational view of a face of an exemplary die formed through the use of a tool such as that illustrated in Figure 7;
Figure 9 is a flow chart illustrating exemplary steps in a manufacturing process for creating fasteners in accordance with the present technique through electric-discharge machining of dies, and roll forming of threads;
Figure 10 is a perspective view of an alternative configuration for a fastener in accordance with aspects of the present technique having a single screwthread; and,

Figure 11 is a graphical representation of torques encountered for insertion of a double-screwthread fastener in accordance with the aspects of the present technique.

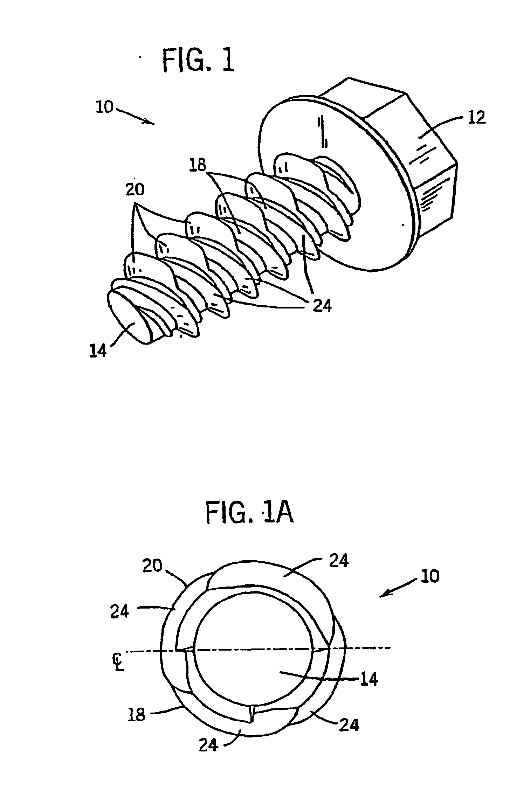

Turning now to the Figures, and referring first to Figure 1, an exemplary fastener formed in accordance with aspects of the present technique is illustrated and designated generally by the reference numeral 10. Fastener 10 includes a head 12 a tip 14, and a threaded shank section 16. Any suitable head and tip portion may be employed in the fastener, such as the hex head illustrated in Figure 1. The tip portion may be similar in diameter to the threaded shank portion, or may be profiled, such as to facilitate insertion into certain materials.

In the illustrated embodiment, fastener 10 has one or more screwthreads which are configured in accordance with aspects of the present technique. In the embodiment illustrated in Figure 1, two such screwthreads 18 and 20 are provided and have similar or identical configurations, displaced 180 degrees at corresponding locations along shank 16. As described below, the configurations may also be different between the multiple screwthreads, where such multiple screwthreads are provided, and the configurations may evolve along the length of each screwthread. Even where a single screwthread is provided, as discussed below, features formed along the single screwthread may evolve between tip 14 and head 12. In general, each screwthread presents a recessed portion 22, and a series of projecting portions 24 rising from the recessed portion. The particular forms of the recessed portions and projecting portions provided on the screwthreads, and presently favored methods for forming these features are described in greater detail below.

Figure 1A illustrates a sectional view through the fastener of Figure 1. As shown in Figure 1A, the projecting portions 24 formed along the shank of the fastener are positioned with respect to one another to provide a desired pattern for entry and exit of the projecting portions into a material being fastened. In particular, the projecting portions 24 formed on screwthread 18 are positioned so as to correspond to recesses formed between projecting portions on screwthread 20. As described more fully below, it has been found the illustrated configuration of corresponding locations for recesses and projecting portions on the double-screwthread fastener facilitates insertion, enhances resistance to pullout, and provides locations in which materials may settle or flow. It may also be noted from the illustration of Figure 1A that in the presently preferred configuration, two projecting portions 24 are located for each revolution of screwthreads 18 and 20, with the projecting portions being offset from one another by 180 degrees.

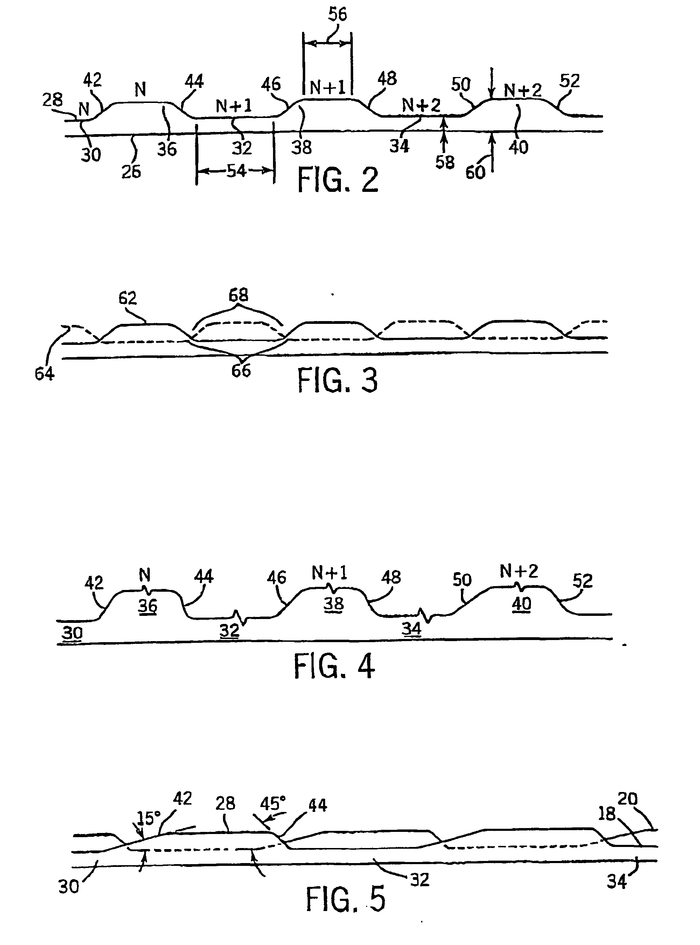

Figure 2 illustrates an exemplary thread profile for one of the screwthreads in a fastener of the type illustrated in Figure 1. In the diagram of Figure 2, reference numeral 26 refers to the root of the thread, while reference numeral 28 refers to the thread crest profile itself, For the sake of illustration, multiple recessed portion profiles are illustrated, including a first recessed portion 30, a second recessed portion 32 and a third recessed portion 34. Along the length of the thread profile 28, these recessed portions may be referred to as successive features N+1, and N+2. Similarly, a series of projecting portions are formed between the recessed portions, including a first projecting portion 36 adjacent to recessed portion 30, a second projecting portion 38 adjacent to recessed portion 32, and a third projecting portion 40 adjacent to recessed portion 34. These projecting portions, too, may be referred to as successive features in, N+1 and N+2. In the embodiment illustrated in Figure 2, each of the recessed portions 30, 32 and 34 are generally identical to one another, while each of the projecting portions 36, 38 and 40 are similarly identical to one another. That is, the length, height (radial extent), form, and adjacent features of each of these recessed portions and projecting portions are similar between the successive N, N+1 and N+2 levels.

While the identical features along the length of the thread profile may be highly desirable in certain applications, the present technique also permits features to be varied along the length of the screwthread. In the embodiment illustrated in Figure 2, for example, each projecting portion presents a lead-in profile and a lead-out profile which can be tailored to specific applications, such as to provide a desired insertion torque and pullout resistance. In the embodiment illustrated in Figure 2, for example, the projecting portion 36 at the N level has a lead-in 42 and a lead-out 44, while projecting portions 38 and 40 at the N+1 and N+2 levels lead-ins 46 and 50 respectively, and lead-outs 48 and 52 respectively. As described in greater detail below, these features can be altered along the length of the fastener to provide differing characteristics, such as for low insertion torque near the tip of the fastener with greater insertion torque as the fastener is progressively inserted, or vice versa. Similarly, pullout resistance can be varied by altering the same lead-in and lead-out profiles. As will be appreciated by those skilled in the art, in general, the lead-in profile will have a greater effect on the insertion torque, while the lead-out profile will have a greater effect upon the pullout resistance.

Other features of the thread profile 28 illustrated in Figure 2 may also be adapted for specific applications. By way of example, each recessed portion 30, 32 and 34 has a length, such as length 54 illustrated for recessed portion 32, which may be altered along the length of the fastener. That is, recessed portions in levels in N+1 and N+2 may differ from one another, where desired. Similarly, each projecting portion 36, 38 and 40 has a predetermined length, represented by reference numeral 56 for projecting portion 38, which maybe adapted and varied along the length of the fastener between the respective lead-in and lead-out profiles. Moreover, the height of the recessed portions, as indicated at reference numeral 58, may be altered, as may the height 60 of the projecting portions. Other features, such as the configuration and shape of the projecting portions and recessed portions may also be changed or evolve along the length of the fastener as described in greater detail below.

Where more than one screwthread is provided on the fastener, the features along each screwthread may simply repeat, or may evolve separately along their lengths, and the features may generally be positioned to correspond to one another in predetermined manners along the length of the shank. Figure 3 illustrates, for example, profiles of a pair of screwthreads 62 and 64, each presenting recessed portions and projecting portions a described above with reference to Figure 2. In addition to allowing for adaptation or tailoring of the projecting portions and recessed portions along the length of each screwthread, the positions of these features may be provided in corresponding manners, such as to provide overlap 66 between lead-in and lead-out regions, or other regions of the screwthreads, and separations 68 between such features. For example, where two screwthreads are provided, lead-out portions of projecting portions from one screwthread may be positioned to correspond to lead-in portions of projecting portions from the second screwthread. Thus, relatively uniform insertion torque may be attained by alternating the projecting portion being driven into the material to be fastened between the two screwthreads. At the same time, the multiple lead-outs of the projecting portions from each screwthread work together, in resisting pullout.

Figure 4 illustrates an exemplary embodiment of a screwthread profile wherein features including recessed portions and projecting portions evolve along the length of the screwthread. As shown in Figure 4, a first recessed portion 30 at a level N along the screwthread joins a first projecting portion 36 at the N level by a lead-in 42. The projecting portion 36 then joins a second recessed portion 32 at a level N+1 by a lead-out 44. As the screwthread continues, then, projecting portions 38 and 40 join recessed portions 32 and 34 by lead-ins 46 and 50 respectively, with projecting portions 38 and 40 terminating lead-outs 48 and 52 respectively. At each level N, N+1 and N+2, then, differing angles and forms may be provided for the lead-ins and lead-outs to provide the desired insertion and pullout resistance characteristics described above.

As illustrated in Figure 5, in a particularly preferred present configuration, the lead-in profiles of a double-screwthread fastener correspond in location about the shank to locations of the lead-out profiles of the second screwthread. Moreover, as shown in Figure 5, it has been found that a relatively shallow lead-in angle, such as 15 degrees, facilitates insertion of the fastener in applications. Excellent pull-out resistance has been found with lead-out angles which are relatively steep, on the order of 45 degrees in the embodiment illustrated in Figure 5. Thus, as noted above, the lead-in and lead-out profiles need not be identical to one another, and optimized profiles, such as a 15 degree/45 degree configuration of Figure 5, may be found to be optimal for certain applications.

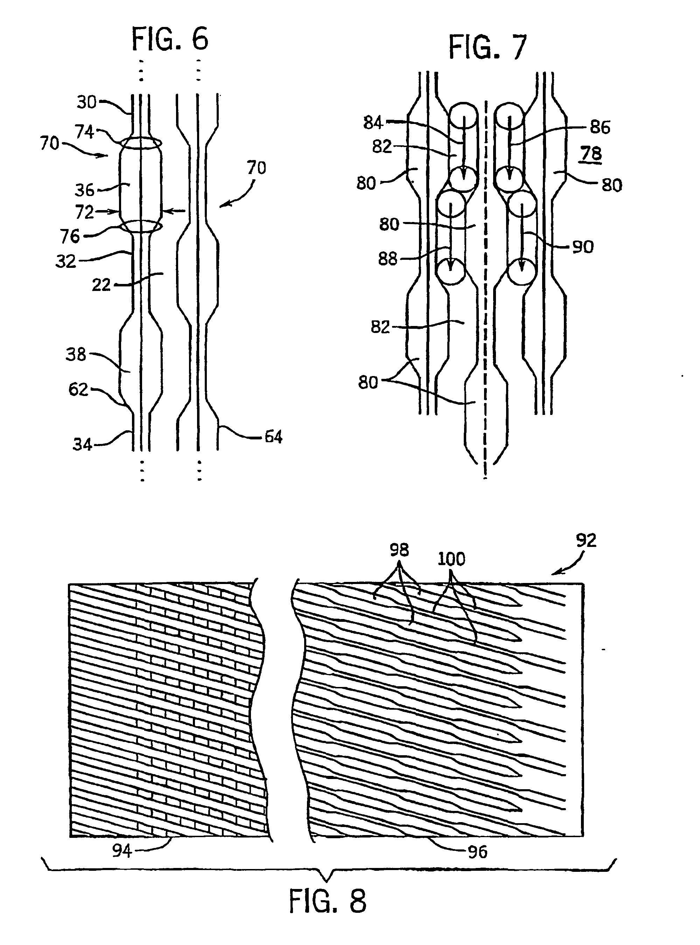

Figure 6 illustrates a pair of screwthreads for a fastener of the type shown in Figure 1, provided with recessed portions and projecting portions which correspond to one another in location and overlap as illustrated generally in Figure 3. Reference numerals on the first screwthread 62 are labeled to correspond to those features illustrated in Figure 2, including recessed portions 30, 32 and 34, and projecting portions 36 and 38. Similar or identical recessed portions and projecting portions are provided along the second screwthread 64, In the plan view of Figure 6, however, it can be seen that the form, referred to generally by reference numeral 70 of each screwthread can evolve along the length of the screwthread between the fastener tip and head. By way of example, the width 72 of each projecting portion can be identical along the length of the screwthread, or may be varied. Similarly, the lead-in form 74 may be modified to provide the desired performance characteristics, particularly the insertion torque. The lead-out form 76 may be tailored in a similar manner. In general, these features may be contoured, angled, or otherwise adapted, and, as mentioned above, need not be identical along the length of the screwthreads.

Various techniques may be employed for manufacturing fasteners in accordance with the features described above. In a presently preferred method, electric-discharge machining (EDM) is employed to create dies which are then used to roll thread fastener blanks. To facilitate creation of the dies, EDM processes are used to create the features that evolve along the length of a roll thread forming die of the type generally known in the art. Figure 7 illustrates an exemplary machining process for an EDM tool used in this technique. As shown in Figure 7, the tool, designated generally by reference numeral 78, may be formed of any suitable material, typically graphite for EDM processes. The tool presents projecting portions 80 generally similar to the projecting portions which will be formed on the resulting fastener, and recessed portions 82 similar to the recessed portions of the screwthreads desired on the fastener. Where evolution of the features is desired along the length of the threads, these will similarly evolve along the length of the projecting portions and recessed portions formed on the EDM tool. Creation of the projecting portions and recessed portions is performed in any suitable manner, such as through milling operations as illustrated in Figure 7. In the embodiment of Figure 7, the features are formed by end milling along tool pads 84, 86, 88 and 90 to form the screwthread profiles and the spaces separating the screwthreads. Similar machining operations are performed along the entire surface of the EDM tool as needed, depending upon the size of the resulting die.

Figure 8 illustrates a die for roll threading a fastener formed through the use of a tool such as that shown in Figure 7. As will be appreciated by those skilled in the art, such roll threading dies, designating generally by the reference numeral 92 in Figure 8, include a sharpening section 94 and a thread forming section 96. Grooves or striations are formed along the die, as shown in Figure 8, to facilitate drawing the fastener blank along the die. As will also be appreciated by those skilled in the art, such dies are typically employed in pairs, with one die being stationary and a second die oscillating to draw and rotate the fastener blank therebetween and to form the threads. By a plunge EDM process, then, features are formed along the die corresponding to the projecting portions and recessed portions of the fastener screwthread. Through use of a tool 78 as illustrated in Figure 7, then, a die as illustrated in Figure 8 will present a series of linear recesses, including relatively deeper recesses 98 corresponding to the desired projecting portions along the screwthreads, and relatively shallower recesses 100 corresponding to the recessed portions along the screwthread profile. It has been found that the use of plunge EDM processes for forming the dies for the present fastener profiles greatly facilitates the production of the dies, and the formation of the desired profiles along the fastener, particularly where these profiles may be varied.

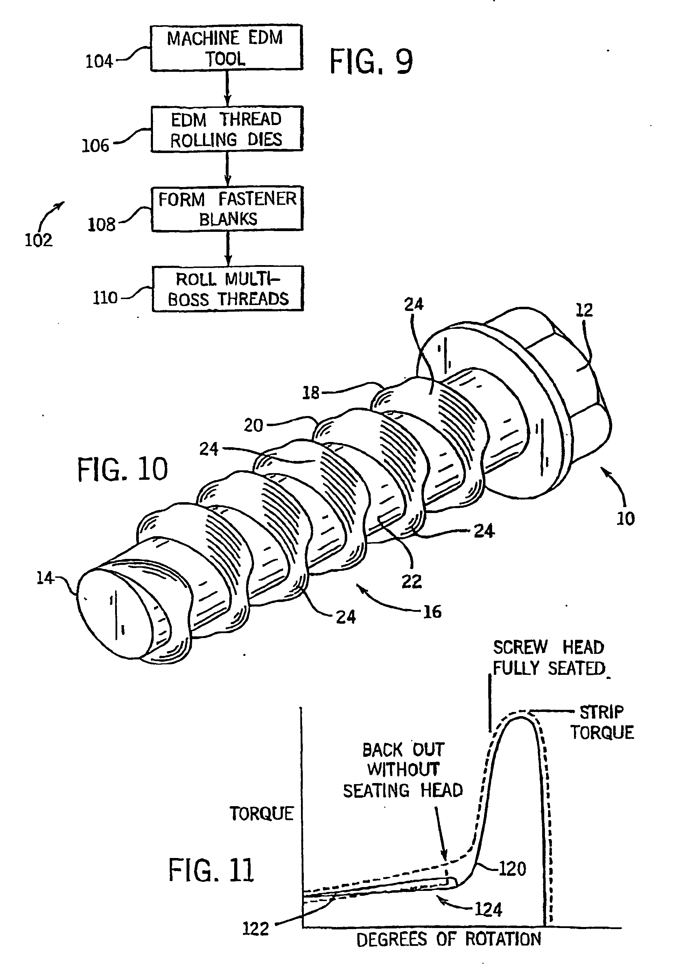

Figure 9 is a flow chart illustrating exemplary steps in a process for forming dies and fasteners in accordance with aspects of the technique described above. The method, designated generally by reference numeral 102 in Figure 7, begins with machining of the EDM tool at step 104. Again, step 104 may include any suitable machining processes, such as milling of the features desired on the resulting fastener. As step 106, the thread rolling dies are formed by plunge EDM processes to create the progressive thread forming recesses as described above with reference to Figure 8. At step 108 fastener blanks are formed. As will be appreciated by those skilled in the art, such blanks typically include an unthreaded shank dimension to provide sufficient material for the threads which are upset from the shank during the thread rolling operation. Finally, at step 110 the multi-projecting portion threads are rolled onto the blanks through the use of specially adapted dies such as that illustrated in Figure 8.

Figure 10 illustrates an alternative embodiment in accordance with aspects of the foregoing technique, wherein a single screwthread is provided. While the double-screwthread configuration provides excellent torque characteristics, in certain applications, aspects of the present technique may be incorporated with a single screwthread. Thus, in the embodiment of Figure 10, rather than separate screwthreads 18 and 20, the reference numerals refer to turns of the same screwthread. For enhancing insertion torque and resistance to pull-out, however, the forgoing teachings with regards to the presence of projecting portions 24, and to the configuration of the projecting portions, differences between projecting portions, differences between lead-in and lead-out profiles, and so forth, maybe incorporated into the single-screwthread fastener.

As noted above, the present technique provides for excellent insertion torque and high resistance to pull-out. Figure 11 illustrates exemplary insertion torque of a fastener having two screwthreads with correspondingly located projecting portions and recessed portions as described above. As shown in Figure 11, reference numeral 120 refers to a torque curve for insertion torques as the fastener is inserted into a base material. As illustrated in the Figure, the torque curve begins at a fairly low level 122 as the fastener is begun to be inserted. Thereafter, torque increases somewhat within a middle range 124, but remains relatively constant as compared to conventional lobed fasteners. While some undulation may be encountered where projecting portions begin entry into the material, it has been found that such changes in insertion torque are extremely minimal. As also noted above, the present technique provides a fastener having excellent resistance to pull-out. It has been found, in particular, that ratios in excess of 1:1 can be obtained through the present technique (i.e., pull-out to insertion torques). While conventional fasteners may obtain ratios on the order of 0.8:1, tests have indicated that double-screwthread fasteners configured in accordance with the foregoing teachings can obtain ratios on the order of 1.1:1 (in materials such as nylon) and higher.

## Claims

1. A threaded fastener comprising:
a head (12);
a tip (14); and,
a shank (16) extending between the head (12) and the tip (14), the shank having a helical screwthread (18,20) formed thereon, the screwthread (18,20) including a plurality of successive projecting portions (24) separated from one another by recessed portions (22), each projecting portion (24) extending radially beyond adjacent recessed portions (22) and presenting a respective profile including a lead-in profile (42) in a direction towards the tip (14), a respective lead-out profile (44) in a direction towards the head (12) and a central section (56) of a substantially uniform radial dimension;
**characterised in that** the screwthread (18,20) includes a crest (28) formed by a single continuous apex.

2. A fastener according to claim 1, wherein for at least one of the projecting portions (24) the lead-in profile (42) differs from the lead-out profile (44).

3. A fastener according to claim 2, wherein crests of the lead-in profile (42) are inclined at approximately 15 degrees from the thread root, and crests of the lead-out profile (44) are inclined at approximately 45 degrees from the thread root.

4. A fastener according to any one of the preceding claims, wherein the respective lead-in profiles (42) of at least two different projecting portions (24) differ from one another.

5. A fastener according to any one of the preceding claims, wherein the respective lead-out profiles (44) of at least two different projecting portions (24) differ from one another.

6. A fastener according to any one of the preceding claims, wherein the respective profiles of at least two different projecting portions (24) differ from one another in length.

7. A fastener according to any one of the preceding claims, wherein the respective profiles of at least two different recessed portions (22) differ from one another in length.

8. A fastener according to any one of the preceding claims, wherein profiles of the projecting portions (24) vary along the shank (16) from the tip (14) to the head (16).

9. A fastener according to any of the preceding claims, wherein the recessed portions (22) include a central section having a substantially uniform radial dimension.

10. A fastener according to any one of the preceding claims, wherein first and second projecting portions (24) are displaced from one another by 180 degrees at generally corresponding locations along the shank (16).

11. A fastener according to any one of the preceding claims, wherein the projecting portions (24) of the screwthread (18,20) extend less than 360 degrees around the shank (16).

12. A fastener according to claim 11, wherein each of the projecting portions (24) extends less than 90 degrees around the shank (16).

13. A fastener according to any preceding claim, wherein first and second projecting portions (24) and the first and second recessed portions (22) are disposed along the shank (16) to provide a substantially constant insertion torque.

14. A fastener according to any one of the preceding claims, wherein the ratio of removal torque to insertion torque is greater than 0.8.

15. A fastener according to claim 14, wherein the ratio is greater than 0.9.

16. A fastener according to claim 14 or 15, wherein the ratio is greater than 1.0.

17. A fastener according to claim 14, 15 or 16, wherein the ratio is greater than 1.1.

18. A fastener according to any one of the preceding claims, wherein the shank (16) includes two screwthreads (18,20) formed thereon, each screwthread (18,20) including a plurality of successive projecting portions (24) separated from one another by recessed portions (22), each projecting portion (24) extending radially beyond adjacent recessed portions (22) and presenting a respective profile including a lead-in profile (42) in a direction towards the tip (14), a respective lead-out profile (44) in a direction towards the head (12) and a central section (56) of a substantially uniform radial dimension.

19. A fastener according to claim 18, wherein the lead-in profiles (42) of the first screwthread (18) and lead-out profiles (44) of the second screwthread (20) are disposed at corresponding locations along the shank (16) between the tip (14) and the head (12).

20. A fastener according to claim 18 or 19, wherein the lead-out profiles (44) of the first screwthread (18) and lead-in profiles (42) of the second screwthread (20) are disposed at corresponding locations along the shank (16) between the tip (14) and the head (12).

21. A fastener according to claims 18, 19 or 20, wherein the projecting portions (24) of the first screwthread (18) and the recessed portions (22) of the second screwthread (20) are disposed at corresponding locations along the shank (16) between the tip (14) and the head (12), to provide a substantially constant insertion torque.

22. A fastener according to claim 18, 19, 20 or 21, wherein the projecting portions (24) of the second screwthread (18) and the recessed portions (22) of the first screwthread (20) are disposed at corresponding locations along the shank (16) between the tip (14) and the head (12) to provide a substantially constant insertion torque.

23. A fastener according to any one of claims 18 to 22, wherein the first screwthread (18) is identical to the second screwthread (20).

## Patentansprüche

1. Befestigungselement mit Gewinde, beinhaltend:
einen Kopf (12);
eine Spitze (14); und
einen Schaft (16), der sich zwischen dem Kopf (12) und der Spitze (14) erstreckt, wobei der Schaft ein spiralförmiges Schraubengewinde (18, 20) daran gebildet hat, wobei das Gewinde (18, 20) eine Vielzahl aufeinander folgender vorstehender Teile (24), welche durch ausgesparte Teile (22) von einander getrennt sind, einschließt, wobei jeder vorstehende Teil (24) sich radial über benachbarte ausgesparte Teile (22) erstreckt und jeweils ein Profil bietet, welches ein Einlaufprofil (42) in einer Richtung zur Spitze (14) hin, ein jeweiliges Auslaufprofil (44) in einer Richtung zum Kopf (12) hin und einen zentralen Abschnitt (56) von im Wesentlichen einheitlicher radialer Abmessung umfasst;
**dadurch gekennzeichnet, dass** das Gewinde (18, 20) einen Scheitel (28) umfasst, welcher durch eine einzige fortlaufende Spitze gebildet ist.

2. Befestigungselement nach Anspruch 1, wobei sich für mindestens einen der vorstehenden Teile (24) das Einlaufprofil (42) von dem Auslaufprofil (44) unterscheidet.

3. Befestigungselement nach Anspruch 2, wobei die Scheitel des Einlaufprofils (42) um ungefähr 15 Grad von dem Gewindegrund geneigt sind und Scheitel des Auslaufprofils (44) um ungefähr 45 Grad von dem Gewindegrund geneigt sind.

4. Befestigungselement nach irgendeinem der vorhergehenden Ansprüche, wobei sich die jeweiligen Einlaufprofile (42) der mindestens zwei vorstehenden Teile (24) voneinander unterscheiden.

5. Befestigungselement nach irgendeinem der vorhergehenden Ansprüche, wobei sich die jeweiligen Auslaufprofile (44) von mindestens zwei vorstehenden Teilen (24) voneinander unterscheiden.

6. Befestigungselement nach irgendeinem der vorhergehenden Ansprüche, wobei sich die jeweiligen Profile von mindestens zwei verschiedenen vorstehenden Teilen (24) von einander in der Länge unterscheiden.

7. Befestigungselement nach irgendeinem der vorhergehenden Ansprüche, wobei sich die jeweiligen Profile von mindestens zwei verschiedenen ausgesparten Teilen (22) von einander in der Länge unterscheiden.

8. Befestigungselement nach irgendeinem der vorhergehenden Ansprüche, wobei Profile der vorstehenden Teile (24) entlang des Schafts (16) von der Spitze (14) zum Kopf (16) variieren.

9. Befestigungselement nach irgendeinem der vorhergehenden Ansprüche, wobei die ausgesparten Teile (22) einen zentralen Abschnitt einschließen, welcher eine im Wesentlichen einheitliche radiale Abmessung aufweist.

10. Befestigungselement nach irgendeinem der vorhergehenden Ansprüche, wobei erste und zweite vorstehende Teile (24) von einander um 180 Grad an im Allgemeinen entsprechenden Positionen entlang des Schafts (16) versetzt sind.

11. Befestigungselement nach irgendeinem der vorhergehenden Ansprüche, wobei sich die vorstehenden Teile (24) des Gewindes (18, 20) weniger als 360 Grad um den Schaft (16) herum erstrecken.

12. Befestigungselement nach Anspruch 11, wobei sich jeder der vorstehenden Teile (24) weniger als 90 Grad um den Schaft (16) herum erstreckt.

13. Befestigungselement nach irgendeinem der vorhergehenden Ansprüche, wobei erste und zweite vorstehende Teile (24) und die ersten und zweiten ausgesparten Teile (22) entlang des Schafts (16) angeordnet sind, um ein im Wesentlichen konstantes Einführdrehmoment zu liefern.

14. Befestigungselement nach irgendeinem der vorhergehenden Ansprüche, wobei das Verhältnis von Entfernungsdrehmoment zu Einführdrehmoment größer als 0,8 ist.

15. Befestigungselement nach Anspruch 14, wobei das Verhältnis größer als 0,9 ist.

16. Befestigungselement nach Anspruch 14 oder 15, wobei das Verhältnis größer als 1,0 ist.

17. Befestigungselement nach Anspruch 14, 15 oder 16, wobei das Verhältnis größer als 1,1 ist.

18. Befestigungselement nach irgendeinem der vorhergehenden Ansprüche, wobei der Schaft (16) zwei Gewinde (18, 20) daran gebildet hat, wobei jedes Gewinde (18, 20) eine Vielzahl aufeinander folgender vorstehender Teile (24) einschließt, welche von einander durch ausgesparte Teile (22) getrennt sind, wobei sich jeder vorstehende Teil (24) radial über benachbarte ausgesparte Teile (22) erstreckt und ein jeweiliges Profil bietet, welches ein Einlaufprofil (42) in einer Richtung zur Spitze (14) hin, ein jeweiliges Auslaufprofil (44) in einer Richtung zum Kopf (12) hin und einen zentralen Abschnitt (56) von im Wesentlichen einheitlicher radialer Abmessung bietet.

19. Befestigungselement nach Anspruch 18, wobei die Einlaufprofile (42) des ersten Gewindes (18) und die Auslaufprofile (44) des zweiten Gewindes (20) an übereinstimmenden Positionen entlang des Schafts (16) zwischen der Spitze (14) und dem Kopf (12) angeordnet sind.

20. Befestigungselement nach Anspruch 18 oder 19, wobei die Auslaufprofile (44) des ersten Gewindegangs (18) und die Einlaufprofile (42) des zweiten Gewindegangs (20) an übereinstimmenden Positionen entlang des Schafts (16) zwischen der Spitze (14) und dem Kopf (12) angeordnet sind.

21. Befestigungselement nach Anspruch 18, 19 oder 20, wobei die vorstehenden Teile (24) des ersten Gewindes (18) und die ausgesparten Teile (22) des zweiten Gewindes (20) an übereinstimmenden Stellen entlang des Schafts (16) zwischen der Spitze (14) und dem Kopf (12) angeordnet sind, um ein im Wesentlichen konstantes Einführdrehmoment zu liefern.

22. Befestigungselement nach Anspruch 18, 19, 20 oder 21, wobei die vorstehenden Teile (24) des zweiten Gewindes (18) und die ausgesparten Teile (22) des ersten Gewindes (20) an entsprechenden Positionen entlang des Schafts (16) zwischen der Spitze (14) und dem Kopf (12) angeordnet sind, um ein im Wesentlichen konstantes Einführdrehmoment zu liefern.

23. Befestigungselement nach irgendeinem der Ansprüche 18 bis 22, wobei das erste Gewinde (18) mit dem zweiten Gewinde (20) identisch ist.

## Revendications

1. Attache filetée comprenant :
une tête (12) ;
une pointe (14) ; et,
une tige (16) s'étendant entre la tête (12) et la pointe (14), la tige présentant un filetage hélicoïdal (18, 20) formé sur celle-ci, le filetage (18, 20) comprenant une pluralité de parties en saillie successives (24) séparées l'une de l'autre par des parties renfoncées (22), chaque partie en saillie (24) s'étendant dans un sens radial au-delà des parties renfoncées adjacentes (22) et présentant un profil respectif comprenant un profil rentrant (42) dans un sens allant vers la pointe (14), un profil respectif sortant (44) dans un sens allant vers la tête (12) et une section centrale (56) de dimension radiale sensiblement uniforme ;
**caractérisée en ce que** le filetage (18, 20) comprend une crête (28) formée par un seul sommet continu.

2. Attache selon la revendication 1, dans laquelle pour au moins une des parties en saillie (24) le profil rentrant (42) diffère du profil sortant (44).

3. Attache selon la revendication 2, dans laquelle les crêtes du profil rentrant (42) sont inclinées d'environ 15 degrés à partir du pied du filetage, et les crêtes du profil sortant (44) sont inclinées d'environ 45 degrés à partir du pied du filetage.

4. Attache selon l'une quelconque des revendications précédentes, dans laquelle les profils rentrants respectifs (42) d'au moins deux parties en saillie différentes (24) diffèrent l'un de l'autre.

5. Attache selon l'une quelconque des revendications précédentes, dans laquelle les profils sortants respectifs (44) d'au moins deux parties en saillie différentes (24) diffèrent l'un de l'autre.

6. Attache selon l'une quelconque des revendications précédentes, dans laquelle les profils respectifs d'au moins deux parties en saillie différentes (24) diffèrent l'un de l'autre en longueur.

7. Attache selon l'une quelconque des revendications précédentes, dans laquelle les profils respectifs d'au moins deux parties renfoncées différentes (22) diffèrent l'un de l'autre en longueur.

8. Attache selon l'une quelconque des revendications précédentes, dans laquelle les profils des parties en saillie (24) varient le long de la tige (16) de la pointe (14) à la tête (16).

9. Attache selon l'une quelconque des revendications précédentes, dans laquelle les parties renfoncées (22) comprennent une section centrale ayant une dimension radiale sensiblement uniforme.

10. Attache selon l'une quelconque des revendications précédentes, dans laquelle une première et une seconde partie en saillie (24) sont déplacées l'une de l'autre de 180 degrés à des emplacements généralement correspondants le long de la tige (16).

11. Attache selon l'une quelconque des revendications précédentes, dans laquelle les parties en saillie (24) du filetage (18, 20) s'étendent sur moins de 360 degrés autour de la tige (16).

12. Attache selon la revendication 11, dans laquelle chacune des parties en saillie (24) s'étend sur moins de 90 degrés autour de la tige (16).

13. Attache selon l'une quelconque des revendications précédentes, dans laquelle une première et une seconde partie en saillie (24) ainsi que la première et la seconde partie renfoncée (22) sont disposées le long de la tige (16) pour apporter un couple d'insertion sensiblement constant.

14. Attache selon l'une quelconque des revendications précédentes, dans laquelle le rapport du couple de retrait au couple d'insertion est supérieur à 0,8.

15. Attache selon la revendication 14, dans laquelle le rapport est supérieur à 0,9.

16. Attache selon la revendication 14 ou 15, dans laquelle le rapport est supérieur à 1,0.

17. Attache selon la revendication 14, 15 ou 16, dans laquelle le rapport est supérieur à 1,1.

18. Attache selon l'une quelconque des revendications précédentes, dans laquelle la tige (16) comprend deux filetages (18, 20) formés sur celle-ci, chaque filetage (18, 20) comprenant une pluralité de parties en saillie successives (24) séparées l'une de l'autre par des parties renfoncées (22), chaque partie en saillie (24) s'étendant dans un sens radial au-delà de parties renfoncées adjacentes (22) et présentant un profil respectif comprenant un profil rentrant (42) dans un sens allant vers la pointe (14), un profil respectif sortant (44) dans un sens allant vers la tête (12) et une section centrale (56) de dimension radiale sensiblement uniforme.

19. Attache selon la revendication 18, dans laquelle les profils rentrants (42) du premier filetage (18) et les profils sortants (44) du second filetage (20) sont disposés à des emplacements correspondants le long de la tige (16) entre la pointe (14) et la tête (12).

20. Attache selon la revendication 18 ou 19, dans laquelle les profils sortants (44) du premier filetage (18) et les profils rentrants (42) du second filetage (20) sont disposés à des emplacements correspondants le long de la tige (16) entre la pointe (14) et la tête (12).

21. Attache selon la revendication 18, 19 ou 20, dans laquelle les parties en saillie (24) du premier filetage (18) et les parties renfoncées (22) du second filetage (20) sont disposées à des emplacements correspondants le long de la tige (16) entre la pointe (14) et la tête (12) pour apporter un couple d'insertion sensiblement constant.

22. Attache selon la revendication 18, 19, 20 ou 21, dans laquelle les parties en saillie (24) du second filetage (18) et les parties renfoncées (22) du premier filetage (20) sont disposées à des emplacements correspondants le long de la tige (16) entre la pointe (14) et la tête (12) pour apporter un couple d'insertion sensiblement constant.

23. Attache selon l'une quelconque des revendications 18 à 22, dans laquelle le premier filetage (18) est identique au second filetage (20).
